## Europäisches Patentamt
## European Patent Office
## Office européen des brevets

(19)

(11) Veröffentlichungsnummer: **0 013 734**
**B1**

(12)

# EUROPÄISCHE PATENTSCHRIFT

(45) Veröffentlichungstag der Patentschrift: 29.06.83

(21) Anmeldenummer: 79105134.5

(22) Anmeldetag: 13.12.79

(51) Int. Cl.³: **G 01 M 1/36**

(54) **Vorrichtung zum dynamischen Auswuchten von rotierenden Körpern, insbesondere von Schleifscheiben.**

(30) Priorität: 29.12.78 PL 212409

(43) Veröffentlichungstag der Anmeldung:
06.08.80 Patentblatt 80/16

(45) Bekanntmachung des Hinweises auf die Patenterteilung:
29.06.83 Patentblatt 83/26

(84) Benannte Vertragsstaaten:
**DE FR GB SE**

(56) Entgegenhaltungen:
**DD - A - 48 320**
**DE - A - 2 005 096**
**DE - B - 1 162 715**
**DE - B - 1 296 990**
**DE - C - 1 577 533**

(73) Patentinhaber: **Instytut Obrobki Skrawaniem**
**ul. Wroclawska 37a**
**Krakow (PL)**

(72) Erfinder: **Wojtowicz, Jan**
**ul. Widok 16/103**
**Krakow (PL)**
Erfinder: **Keller, Czeslaw, Prof. Dr.-Ing.**
**ul. Smolensk 22/1**
**Krakow (PL)**

(74) Vertreter: **Eitle, Werner, Dipl.-Ing. Dipl.-Ing.**
**Werner Eitle Dr. rer. nat. Klaus Hoffmann et al,**
**Dipl.-Ing. Werner Lehn Dipl.-Ing. Klaus Füchsle**
**Dr. rer. nat. Bernd Hansen Arabellastrasse 4**
**D-8000 München 81 (DE)**

Courier Press, Leamington Spa, England.

Vorrichtung zum dynamischen Auswuchten von rotierenden Körpern,
insbesondere von Schleifscheiben

Die Erfindung betrifft eine Vorrichtung zum dynamischen Auswuchten von rotierenden Körpern, insbesondere von Schleifscheiben mit großen Abmessungen und hohen Drehgeschwindigkeiten, bei welcher der Ausgleich der Unwucht durch Verschieben einer zusammen mit dem auszuwuchtenden Körper rotierenden Korrekturmasse erfolgt. Dabei ist die mit einer zur Drehachse der Vorrichtung schrägverlaufenden zylindrischen Führungsbohrung versehene Korrekturmasse mit einer Scheibe, die mit einer Mutter zur Winkelverschiebung der Korrekturmasse gegenüber einem Befestigungskörper in einer zur Drehachse der Vorrichtung senkrechten Ebene zusammenarbeitet, und mit einer verschieblich eingesetzten Welle zur Radialverschiebung der Korrekturmasse verbunden.

Es sind Vorrichtungen zum Auswuchten von rotierenden Schleifscheiben bekannt, die nach dem Prinzip des Verschiebens von Korrekturmassen in der Drehebene der Schleifscheibe arbeiten. Solche mit einem eine Korrekturbaugruppe und eine Stellgruppe enthaltenden Gehäuse versehene Vorrichtungen werden am Ende der Schleifspindel befestigt und drehen sich mit der Schleifscheibe mit.

Bei einer ersten Gruppe dieser Vorrichtungen werden die Korrekturmassen radial zu der Drehachse auf zwei zueinander senkrechten Bahnen verschoben. Eine solche Lösung ist aus der DE—C—1 218 754 bekannt.

Jedes von zwei Korrekturmassenpaaren wird mittels Zahnstangen und durch eine Buchse und eine Welle angetriebenen Zahnrädern verlagert, die mittels Einstellrädern gedreht werden. Bei einer in der US—A—3 376 759 beschriebenen Variante dieser Vorrichtung werden die auf die Korrekturmassen während des Drehens wirkenden Zentrifugalkräfte durch zwischen den Massen und dem Gehäuse eingebaute Federn ausgeglichen.

Zu dieser Gruppe von Lösungen ist auch die aus der SE—A—327 837 (GB—A—1 281 126) bekannte Vorrichtung zu zählen. In einem Grund-Körper der Vorrichtung sind kreuzartig zueinander zwei mit koaxialen Bohrungen versehene Korrekturmassen angeordnet. Die Verschiebung dieser Massen gegeneinander auf rechtwinkligen Koordinaten erfolgt mittels einer Stellgruppe durch axiale Verlagerung einer Buchse und einer Welle, die mit Ringenden mit schrägen Vorsprüngen versehen sind, welche in zwei schräg zu der Achse der Bohrungen und parallel zueinander angeordnete Führungen in der Bohrung jeder Korrektionsmasse eingreifen.

Ein Nachteil der beschriebenen Gruppe von Vorrichtungen besteht in Schwierigkeiten bei der genauen Festlegung der Komponenten der resultierenden Auswuchtmasse. Der Einsatz von zwei Korrektionsmassen führt zu einem wesentlichen Ausbau der Auswuchtvorrichtungen.

Eine zweite Gruppe an Lösungen umfaßt Vorrichtungen, bei welchen eine radiale Verschiebung der Korrekturmasse und zugleich deren Winkelverschiebung erfolgt. Ein Beispiel einer derartigen Lösung ist die Vorrichtung nach der DE—C—1 577 533, in welcher die Korrekturmasse mittels einer Buchse und einer Welle radial auf einer Gleitführung und zugleich winkelverschoben wird. Ein Nachteil dieser Lösung liegt in dem ausgebauten rotierenden Triebwerk, welches das genaue Auswuchten der Spindelgruppe erschwert und deren Drehgeschwindigkeit einschränkt.

Bei der aus der PL—A—97 816 bekannten Vorrichtung ist in dem Körper der Vorrichtung eine verschieblich an der mit einer Mutter zusammenarbeitenden Scheibe befestigte Korrektionsmasse angeordnet. Durch Drehen der Mutter wird eine Winkelverschiebung der Korrekturmasse gegenüber dem Körper in einer zu der Drehachse senkrechten Ebene hervorgerufen. Die Korrekturmasse ist mittels Zugbändern mit einer Welle verbunden. Die Radialverschiebung der Korrekturmasse wird durch Drehen eines Handrades zur Axialverschiebung der mit der Welle, auf welche die Zugbänder aufgewickelt werden, zusammenarbeitenden Ritzelwelle erreicht.

Eine solche Lösung ermöglicht die Verschiebung der Korrekturmasse gegenüber zwei Koordinaten. Eine Verbesserung der obigen Lösung mit räumlicher Verlagerung der Korrekturmasse besteht darin, daß der Körper der Vorrichtung verschiebbar in dem Gehäuse gelagert ist. Ein Nachteil dieser Lösung ist in der geringen Genauigkeit der Radialanzeigen der Korrekturmasse aufgrund der verwendeten Zugbänder, die mit der Zeit einer Verformung unterliegen, zu sehen.

Zu dieser Gruppe von Lösungen ist auch die aus der DD—A—48 320 bekannte Vorrichtung zu zählen. Diese Einrichtung umfaßt ein zylindrisch geformtes Ringgewicht, das vermittels einer Schrägbohrung auf dem zylindrischen Umfang eines Gegenstücks mit einer Paßfeder geführt ist. Ringgewicht und Gegenstück sind konzentrisch um eine Flanschnabe angeordnet. Durch eine axiale Verschiebung des Gewichtsschwerpunktes des Ringgewichtes erhält dieses eine exzentrische Gewichtsverlagerung als Gegenwucht zur Schleifscheibenunwucht, während durch Drehung des Gegenstückes über ein am Gegenstück sitzendes Kegelrad die eingestellte Gegenwucht in die Längsebene der vorhandenen Scheibenwucht um 180° verstellbar ist.

Die Erfindung liegt demgegenüber die Aufgabe zugrunde, eine Vorrichtung zum dynamischen Auswuchten rotierender Körper zu entwickeln, die bei einer kompakten Bauart und verhältnismäßig geringen Abmessungen ein genaues Auswuchten, z.B. von auf einer Schleifspindel befestigten und mit hohen Drehgeschwindigkeiten rotierenden Schleifscheiben, ermöglicht.

Die erfindungsgemäße Lösung besteht darin, daß die Welle, die in die schrägverlaufende Führungsbohrung der Korrekturmasse hineinragt, in einem zylinderförmigen Ring endet, der eine zu der Achse der Welle schrägverlaufende und mit der die Achse der Führungsbohrung zusammenfallende Achse aufweist.

Eine zweckmäßige Ausgestaltung der Erfindung besteht darin, daß zwischen der Korrekturmasse und der Scheibe in der in der Drehachse der Vorrichtung liegenden Verschiebeebene der Korrekturmasse mindestens ein federndes Entlastungselement eingesetzt ist, das mit seinem einen Ende mittels eines Kragarmes auf der Scheibe und mit seinem anderen Ende mittels einer Schraube auf der Korrekturmasse abgestützt ist.

Eine weitere vorteilhafte Ausführungsform ist im Einsatz einer Spiralfeder als federndes Entlastungselement zu sehen.

Die Scheibe ist zweckmäßigerweise mit der Mutter mittels eines nicht selbsthemmenden, mehrgängigen Gewindes verbunden.

Die Führungsbohrung kann vorteilhaft mit einer in der Ebene der schrägen liegenden Rille und der Ring mit einem in diese Rille eingreifenden Stift versehen sein.

Es ist aber auch möglich, daß diese Bohrung mit einer in der Ebene der schrägen Achse liegenden Führungsrippe und der Ring in diesem Fall mit einem der Rippe entsprechenden Ausschnitt versehen ist.

Eine Variante der erfindungsgemäßen Vorrichtung besteht darin, daß die in einer Buchse angeordnete Gruppe zur Radial- und Winkelverschiebung der Korrekturmasse verschieblich in einen Ring und über die Platte in einen Körper eingesetzt ist, wobei eine Möglichkeit der Verschiebung längs der Drehachse der Vorrichtung vorgesehen ist.

Eine andere Ausführungsform ist dadurch gekennzeichnet, daß die Gruppe zur Radial- und Winkelverschiebung der Korrekturmasse zusammen mit dieser Masse in einer verschieblich mit einem Ring verbundenen Buchse und in einer verschieblich in einer Spindelwelle eingesetzten Buchse angeordnet ist, wobei eine Möglichkeit der Verschiebung längs der Drehachse der Schleifspindel vorgesehen ist.

Ein Vorteil der erfindungsgemäßen Lösung besteht in der Möglichkeit des genauen Auswuchtens der auf der Schleifspindel befestigten Schleifscheibe für jeden Drehgeschwindigkeitsbereich der Schleifmaschinen. Aufgrund der kleinen Abmessungen ergibt die Vorrichtung keine Konstruktionsbelastungen der Schleifmaschine und keine technologischen Erschwerungen beim Schleifen.

Der Erfindungsgegenstand wird nachstehend anhand der in der beigefügten Zeichnung dargestellten Ausführungsbeispiele näher erläutert. Es zeigt

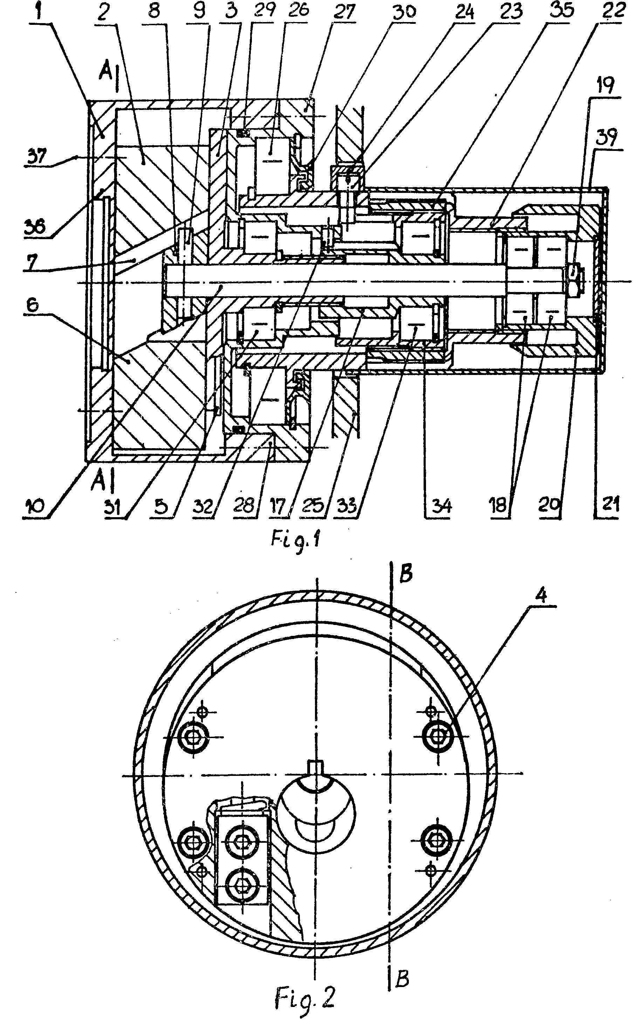

Fig. 1 den Längsschnitt durch die Vorrichtung,

Fig. 2 den Querschnitt durch die Vorrichtung in der in Fig. 1 bezeichneten Ebene A—A,

Fig. 3 den Schnitt B—B durch das in Fig. 2 bezeichnete Entlastungselement,

Fig. 4 die Längsansicht der Vorrichtung,

Fig. 5 eine Variante der Verbindung der Korrekturmasse mit dem Schrägring,

Fig. 6 den Längsschnitt durch die Vorrichtung mit räumlicher Verlagerung der Korrekturmasse, und

Fig. 7 den Längsschnitt durch die an den Spindelstock der Schleifmaschine angepaßte Vorrichtung mit räumlicher Verlagerung der Korrekturmasse.

In einem Befestigungs-Körper 1 ist eine verschieblich mit der Scheibe 3 und mittels Schrauben 4 mit den Führungen 5 verbundene Korrekturmasse 2 angeordnet. In der Korrekturmasse 2 ist eine schrägverlaufende Führungsbohrung 6 mit zylindrischer Form ausgebildet, deren Achse in der Verschiebeebene der Korrekturmasse 2 liegt und die Drehachse der Vorrichtung schneidet. In der Führungsbohrung 6 ist eine Rille 7 ausgebildet und verschieblich ein zylinderförmiger Ring 8 mit einem in die Rille 7 eingreifenden Stift 9 einer Welle 10 eingesetzt. Die Achse des zylinderförmigen Ringes 8 verläuft schräg zu der Achse der Welle 10. Zwischen der Korrekturmasse 2 und der Scheibe 3 sind zwei Spiralfedern 11 angeordnet, die mit ihrem einen Ende mittels einer Unterlage eines mittels Schrauben 14 an der Scheibe 3 angeschraubten Kragarmes 13 auf der Scheibe 3 und mit ihrem anderen Ende mittels einer Unterlage 15 und einer Schraube 16 auf der Korrekturmasse 2 abgestützt sind.

Die Welle 10 ist verschieblich in der Scheibe 3 und drehbar in einer Mutter 17 und über ein mit der Mutter 19 gesichertes Lager 18 in einem Handrad 20 eingesetzt. Das Handrad 20 besitzt einen Montageeinsatz 21 und ist in die unbewegliche Buchse 22 eingesetzt, die mittels einer Schraube 23 mit einer aufgelegten, in einem Außengehäuse 25 angeordneten Dämpfungskappe 24 arretiert ist.

Die unbewegliche Buchse 22 besitzt ein Lager 26 mit einem aufgelegten Ring 27. Der Ring 27 ist verschieblich mit dem Befestigungs-Körper 1 verbunden und mittels Schrauben 28 zusammengeschraubt. Die Abdichtung zwischen dem Ring 27 und dem Befestigungs-Körper 1 ist durch einen Ring 29 und einen Spritzring 30 gebildet. Die Scheibe 3 ist mit dem Ring 27 mittels eines Lagers 31 verbunden, während sie mit der Mutter 17 mittels eines nicht selbsthemmenden mehrgängigen Gewindes oder mittels nicht selbsthemmender Nocken verbunden ist.

Die Mutter 17 ist auf die Scheibe 3 aufgesetzt und durch den Stift 32 gegen Drehung gegenüber dem Ring 27 gesichert. Die Mutter 17 ist mittels eines Lagers 33 mit einer Buchse 34 und mit der drehbar in der unbeweglichen Buchse 22 eingesetzten Mutter 35 verbunden. Der Körper 1 weist eine Grundbohrung 36 und Gewindebohrungen 37 zur Aufnahme des Verbindungsstückes auf. Die Buchse 22 besitzt ein Schauglas 38 und ist durch eine verschiebliche Schutzhülse 39 abgedeckt. Auf die Buchse 22, die Buchse 34 und den Ring 27 sind Skalen aufgetragen.

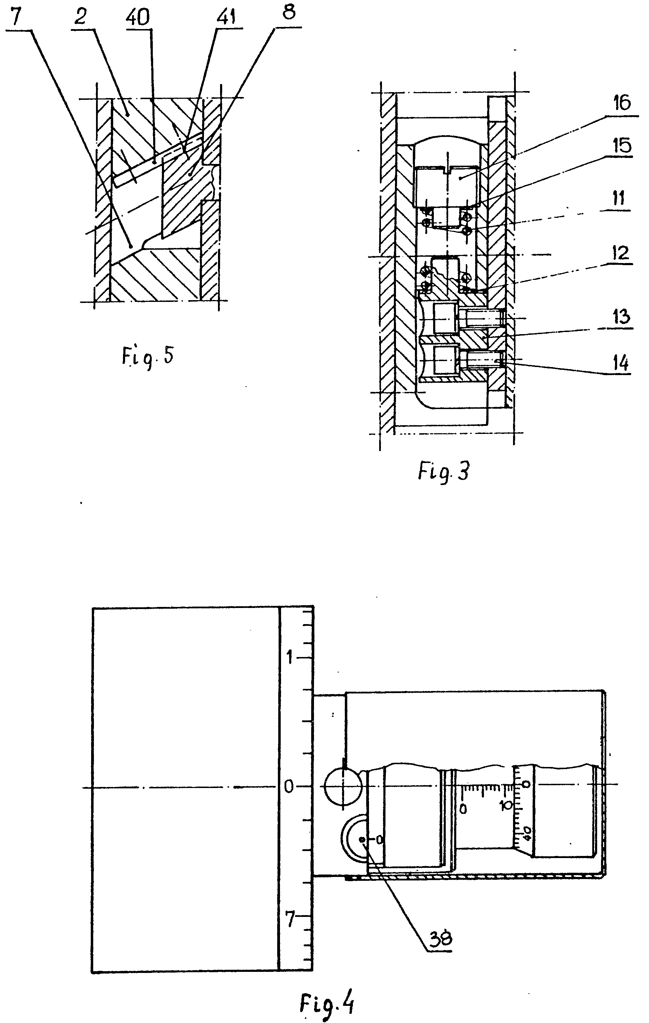

In einem anderen, in Fig. 5 dargestellten Ausführungsbeispiel ist in der Korrekturmasse 2 die schrägverlaufende Führungsbohrung 6 mit einer verschieblich mit der in dem schrägen Ring 8 der Welle ausgebildeten Rille 41 verbundenen Rippe 40 versehen.

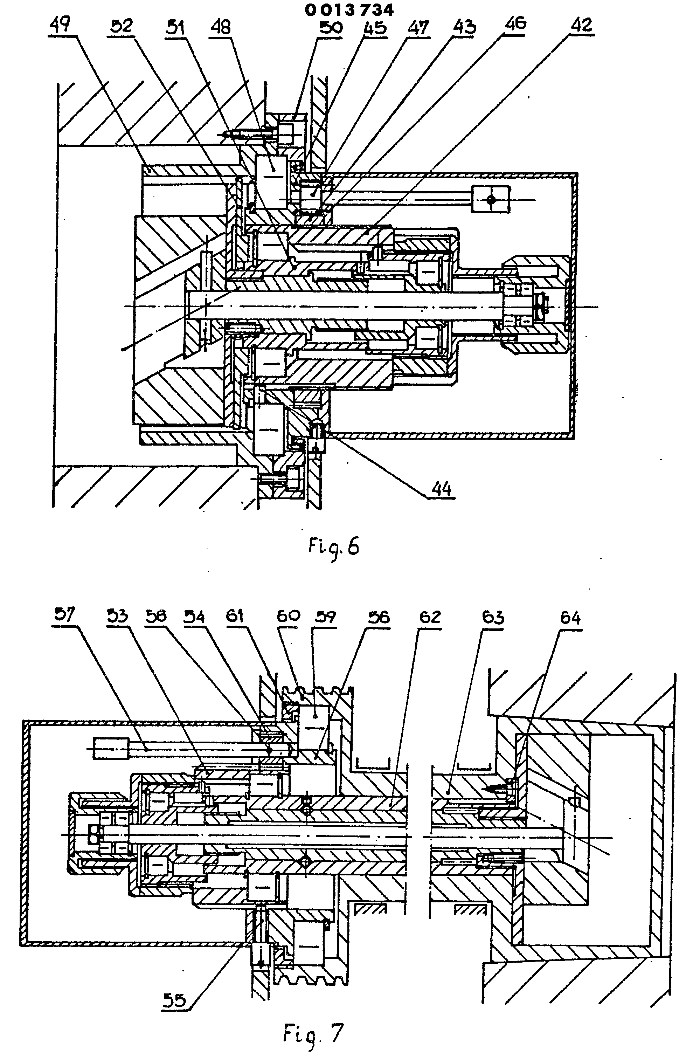

In der Universalvariante mit räumlicher Verlagerung der Korrekturmasse gemäß Fig. 6 ist eine Buchse 42 mittels eines Gewindes mit einer Mutter 43 verbunden und gegen Drehung durch einen in einen verschieblich mit der Buchse 42 verbundenen Ring 45 eingesetzten Stift 44 gesichert. Die Mutter 43 ist drehbar in den Ring 45 und in einer an den Ring 45 angeschraubten Platte 46 eingesetzt und mit einem drehbar in dem Ring 45 und in der Platte 46 gelagerten Handzahnrad 47 verzahnt. Der Ring 45 ist über ein Lager 48 mit einem Befestigungs-Körper 49 mittels eines an dem Befestigungs-Körper 49 angeschraubten Dichtungsringes 50 verbunden. Der Befestigungs-Körper 49 ist mit einer Buchse 51 mittels einer verschieblich mit ihm und fest mit der Buchse 51 verbundenen Mehrkeilplatte 52 verbunden.

In einer weiteren, in die Schleifspindel einer Schleifmaschine eingebauten Variante der Vorrichtung mit räumlicher Verlagerung der Korrekturmasse gemäß Fig. 7 ist eine Buchse 53 mit einem Zahnrad 54 in Eingriff und ist gegen Drehung mittels eines in einen verschieblich mit der Buchse 53 verbundenen Ring 56 eingesetzten Gewindestiftes 55 gesichert. Das Zahnrad 54 ist mit einem Handrad 57 mittels eines Stiftes 58 verbunden, während das Handrad 57 drehbar in den Ring 56 eingesetzt ist. Der Ring 56 ist über ein Lager 59 mit einer Riemenscheibe 60 und Mutter 61 verbunden. Eine Buchse 62 ist verschieblich mit einer Spindelwelle 63 verbunden und gegen Drehung mittels eines an der Spindelwelle 63 angeschraubten Anschlags 64 gesichert.

Die Arbeitsweise der Vorrichtung ist wie folgt. Durch Drehen der Mutter 35 wird eine Axialverschiebung der Buchse 34 gegenüber der Buchse 22 erreicht. Die Axialbewegung der Buchse 34 wird über das Lager 33 auf die Mutter 17 übertragen. Die Axialverschiebung der Mutter 17 bewirkt ein Drehen der Scheibe 3, die mit der Mutter 17 über die nicht selbstthemmenden Nocken zusammenarbeitet. Ein Drehen der Scheibe 3 bedingt ein Drehen der Führungen 5 und damit der Korrekturmasse 2 sowie der Welle 10, des Ringes 8 und des Stiftes 9 gegenüber dem Befestigungs-Körper 1. Durch Drehen des Handrades 20 wird über das Lager 18 eine Axialverschiebung der Welle 10 erreicht. Der in der schrägen Führungsbohrung 6 eingesetzte Ring 8 und der Stift 9 der Welle 10 verschieben radial die Korrekturmasse 2. Das federnde Entlastungselement 11 entlastet die Gruppe zur Verschiebung der Masse durch die Zentrifugalkraft, die von der Korrekturmasse, deren Lage und von der Winkelgeschwindigkeit des auzuwuchtenden Systems abhängig ist. Die Lage der Korrekturmasse wird durch Ablesen der Anzeigen der auf der Buchse 22 aufgetragenen Skala gegenüber dem Handrad 20 und der Anzeigen der auf der Buchse 34 aufgetragenen Skala durch das Schauglas 38 bestimmt, welche der auf dem Ring 27 aufgetragenen Winkelskala entsprechen.

Bei dem Ausführungsbeispiel mit räumlicher Verlagerung der Korrekturmasse gemäß Fig. 6 wird durch Drehen des Handrades 47 ein Drehen der Mutter 43 bewirkt, welche die Axialverschiebung der Buchse 42 und damit der ganzen Gruppe zur Flächenverlagerung der Korrekturmasse zusammen mit dieser Masse gegenüber dem Ring 45 und dem Befestigungs-Körper 49 längs der Drehachse der Vorrichtung bedingt.

Bei der in die Schleifspindel eingebauten Variante gemäß Fig. 7 wird die räumliche Verlagerung durch Drehen des Handrades 57 und damit des Zahnrades 54 und des Stiftes 58 erreicht, wodurch die Axialverschiebung der Buchse 62 und damit der ganzen Gruppe zur Flächenverlagerung der Korrekturmasse längs der Drehachse der Vorrichtung hervorgerufen wird.

**Patentansprüche**

1. Vorrichtung zum dynamischen Auswuchten von rotierenden Körpern, insbesondere von Schleifscheiben, durch Verlagerung einer rotierenden Korrekturmasse zusammen mit dem auszuwuchtenden Körper, bei welcher die mit einer zur Drehachse der Vorrichtung schrägverlaufenden zylindrischen Führungs-Bohrung versehene Korrekturmasse mit einer Scheibe, die mit einer Mutter zur Winkelverschiebung der Korrekturmasse gegenüber einem Befestigungs-Körper in einer zu der Drehachse der Vorrichtung senkrechten Ebene zusammenarbeitet, sowie mit einer verschieblich eingesetzten Welle zur Radialverschiebung der Masse verbunden ist, dadurch gekennzeichnet, daß die Welle (10), die in die schrägverlaufende Führungsbohrung (6) der Korrekturmasse (2) hineinreicht, in einem zylinderförmigen Ring (8) endet, der eine zu der Achse der Welle (10) schrägverlaufende und mit der Achse der Führungsbohrung (6) zusammenfallende Achse aufweist.

2. Vorrichtung nach Anspruch 1, dadurch gekennzeichnet, daß zwischen der Korrekturmasse (2) und der Scheibe (3) in der in der Drehachse der Vorrichtung liegenden Verschiebeebene der Korrekturmasse (2) mindestens ein federndes Entlastungselement (11) eingesetzt ist, das mit seinem einen Ende mittels eines Kragarmes (13) auf der Scheibe (3) und mit seinem anderen Ende mittels einer Schraube (16) auf der Korrekturmasse (2) abgestützt ist.

3. Vorrichtung nach Anspruch 1, dadurch gekennzeichnet, daß das federnde Entlastungsglied (11) durch eine Spiralfeder gebildet ist.

4. Vorrichtung nach Anspruch 7, dadurch gekennzeichnet, daß die Scheibe (3) mit der Mutter (17) mittels eines nicht selbsthemmenden mehrgängigen Gewindes verbunden ist.

5. Vorrichtung nach Anspruch 4, dadurch gekennzeichnet, daß die Führungsbohrung (6) mit einer in der Ebene der schrägen Achse liegenden Rille (7) und der Ring (8) mit einem in die Rille (7) eingreifenden Stift (9) versehen ist.

6. Vorrichtung nach Anspruch 4, dadurch gekennzeichnet, daß die Führungsbohrung (6) mit einer in der Ebene der schrägen Achse liegenden Führungsrippe (40) und der Ring (8) mit einem der Rippe (40) entsprechenden Ausschnitt (41) versehen ist.

7. Vorrichtung nach Anspruch 5 oder 6, dadurch gekennzeichnet, daß die in einer Buchse (42) angeordnete Gruppe zur Radial- und Winkelverschiebung der Korrekturmasse verschieblich in einen Ring (45) und über die Platte (52) in eine Körper (49) eingesetzt ist, wobei eine Möglichkeit der Verschiebung längs der Drehachse der Vorrichtung vorgesehen ist.

8. Vorrichtung nach Anspruch 5 oder 6, dadurch gekennzeichnet, daß die Gruppe zur Radial- und Winkelverschiebung der Korrekturmasse zusammen mit dieser Masse in einer verschieblich mit einem Ring (56) verbundenen Buchse (53) und in einer verschieblich in einer Spindelwelle (63) eingesetzten Buchse (62) angeordnet ist, wobei eine Möglichkeit der Verschiebung längs der Drehachse der Schleifspindel vorgesehen ist.

**Revendications**

1. Dispositif pour l'équilibrage dynamique de corps tournants, en particulier de meules par déplacement d'une masse corrective tournante conjointement avec le corps à équilibrer, dans lequel la masse corrective, pourvue d'un alésage cylindrique de guidage s'étendant obliquement par rapport à l'axe de rotation du dispositif, est reliée à un disque qui coopère avec un écrou pour le déplacement angulaire de la masse corrective relativement à un corps de fixation dans un plan perpendiculaire à l'axe de rotation du dispositif ainsi qu'à un arbre monté de façon déplaçable pour le déplacement radial de la masse, caractérisé en ce que l'arbre (10) qui pénètre dans l'alésage de guidage oblique (6) de la masse corrective (2), se termine dans un anneau cylindrique (8) qui présente un axe s'étendant obliquement par rapport à l'axe de l'arbre (10) et coïncidant avec l'axe de l'alésage de guidage (6).

2. Dispositif selon la revendication 1, caractérisé en ce qu'entre la masse corrective (2) et le disque (3), dans le plan de déplacement de la masse corrective (2) situé dans l'axe de rotation du dispositif, est monté au moins un élément de décharge élastique (11) qui prend appui par l'une de ses extrémités au moyen d'un bras en porte-à-faux (13) sur le disque (3) et par son autre extrémité au moyen d'une vis (16) sur la masse corrective (2).

3. Dispositif selon la revendication 1, caractérisé en ce que l'organe de décharge élastique (11) est constitué par un ressort hélicoïdal.

4. Dispositif selon la revendication 1, caractérisé en ce que le disque (3) est relié à l'écrou (17) au moyen d'un filetage à filets multiples non autobloquant.

5. Dispositif selon la revendication 4, caractérisé en ce que l'alésage de guidage (6) est pourvu d'une rainure (7) située dans le plan de l'axe oblique et l'anneau (8) est pourvu d'une cheville (9) pénétrant dans la rainure (7).

6. Dispositif selon la revendication 4, caractérisé en ce que l'alésage de guidage (6) est pourvu d'une nervure de guidage (40) située dans le plan de l'axe oblique et l'anneau (8) est pourvu d'une découpe (41) correspondant à la nervure (40).

7. Dispositif selon la revendication 5 ou 6, caractérisé en ce que le groupe pour le déplacement radial et angulaire de la masse corrective, disposé dans une douille (42), est monté de façon déplaçable dans une bague (45) et, par l'intermédiaire du plateau (52), dans une corps (49), auquel cas est prévue une possibilité du déplacement le long de l'axe de rotation du dispositif.

8. Dispositif selon la revendication 5 ou 6, caractérisé en ce que le groupe pour le déplacement radial et angulaire de la masse corrective est monté, conjointement avec cette masse, dans un manchon (53) relié de façon déplaçable à un bague (56) et dans un manchon (62) inséré de manière déplaçable dans un arbre rotatif (63), auquel cas est prévue une possibilité du déplacement le long de l'axe de rotation de la broche porte-meule.

**Claims**

1. Apparatus for the dynamic balancing of rotating bodies, in particular grinding discs, by displacing a rotating correcting mass together with the body to be dynamically balanced, in which apparatus the correcting mass is provided with a cylindrical guide bore extending obliquely in relation to the axis of rotation of the apparatus and comprises a disc which cooperates with a nut for angular displacement of the correcting mass relative to a fixing member in a plane at right angles to the axis of rotation of the apparatus, the correcting mass also being connected to a displaceably mounted shaft for radial displacement of the mass, characterized in that the shaft (10), which extends into the obliquely disposed guide bore (6) of the correcting mass (2), terminates in a cylindrical ring (8), which has an axis which extends obliquely in relation to the axis of the shaft (10) and which coincides with the axis of the guide bore (6).

2. Apparatus according to Claim 1, characterized in that at least one resilient load-relieving element (11) is fitted between the correcting mass (2) and the disc (3) in the plane of displacement of the correcting mass (2) that lies on the axis of rotation of the apparatus, which load-relieving element is braced on the disc (3) at one of its ends by means of a bracket (13) and on the correcting mass (2) at its other end by means of a screw (16).

3. Apparatus according to Claim 1, characterized in that the resilient load-relieving element (11) is formed by a spiral spring.

4. Apparatus according to Claim 1, characterized in that the disc (3) is connected to the nut (17) by means of a non-self-locking multiple thread.

5. Apparatus according to Claim 4, characterized in that the guide bore (6) is provided with a groove (7) lying in the same plane as the oblique axis, and the ring (8) is provided with a pin (9) engaging in the groove (7).

6. Apparatus according to Claim 4, characterized in that the guide bore (6) is provided with a guide rib (40) lying in the same plane as the oblique axis, and the ring (8) has a cut-out portion (41) complementary to the rib (40).

7. Apparatus according to Claim 5 or Claim 6, characterized in that the group, that is designed to effect radial and angular displacement of the correcting mass and is arranged in a bush (42), is displaceably fitted in a ring (45) and in a member (49) by way of a plate (52), possible displacement along the axis of rotation of the apparatus being provided for.

8. Apparatus according to Claim 5 or Claim 6, characterized in that the group for effecting radial and angular displacement of the correcting mass is arranged, together with this mass, in a bush (53) displaceably connected to a ring (56) and in a bush (62) displaceably inserted in a spindle shaft (63), possible displacement along the axis of rotation of the grinding spindle being provided for.

Fig.1

Fig.2

0 013 734

1

Fig. 5

Fig. 3

Fig. 4

2

0 013 734

Fig. 6

Fig. 7

3